# EUROPÄISCHE PATENTANMELDUNG

(11) **EP 1 808 588 A1**
(43) Veröffentlichungstag der Anmeldung: **18.07.2007**
(21) Anmeldenummer: 06000781.2
(22) Anmeldetag: 14.01.2006
(51) Int. Cl.: F02C 6/00, F01K 21/04, F02C 6/18, F01K 23/10, F02C 7/18

(54) **Leistungs- und Wirkungsgradsteigerung in Gasturbinen- und Kombi-Anlagen**

(71) Anmelder: Thermal PowerTec GmbH, 8046 Zürich (CH)
(72) Erfinder: Youssef, Mustafa, Erchenbühlstr. 34 8046 Zürich (CH)
(74) Vertreter: Heinzel, Oliver

(57) **Zusammenfassung**

Die Erfindung bezieht sich auf das Gebiet der thermischen Kraftwerkanlagen und betrifft Schaltungen in solchen Anlagen zur Steigerung der Leistung und des Wirkungsgrads. Sowohl in Gasturbinen- als auch in Kombi-Anlagen werden die Turbinengase in der Gasturbine (3) auf einen Unterdruck expandiert, die Rauchgase werden durch Wärmetauscher, welche in einem Unterdruckbehälter (12) angeordnet sind, gekühlt und durch einen Rauchgaskompressor (4) auf den Atmosphärendruck komprimiert. Ferner wird bei Gasturbinenanlagen die Gasturbinenkühlluft ohne einen Wasserverbrauch vorbereitet und zur Kühlung der Gasturbine in das Kühlsystem geführt.
Bei Kombi-Anlagen wird der zugeführte Wärmestrom bei sequentieller Verbrennung erhöht und die Abgastemperatur durch die Gasexpansion in den Unterdruckbereich reduziert. Das ermöglicht im Dampferzeuger den Einsatz eines Einzel-Dampfdruck-Kreislaufs bei tiefer Abgastemperatur, um minimale Abdampf- und Abgas-Verluste zu erreichen. Dadurch kann der thermische Wirkungsgrad der Kombi-Anlage um mehr als 0.02 (d.h. ηth net >0.60) und die Leistung um mehr als 20% erhöht werden.
Bei Gasturbinenanlagen kann durch die Gasexpansion in den Unterdruckbereich die Abgastemperatur stark reduziert und somit der Wirkungsgrad um 0.07-0.10 (d.h. ηth net = 0.44-0.47) und die Leistung um 20-26% erhöht werden. Durch zusätzliche Zwischenkühlung der Kompressionsluft und die rekuperative Lufterhitzung kann der Wirkungsgrad um mehr als 0.12 (d.h. ηth net ≈0.50) und die Leistung um ca. 30% erhöht werden.

## Beschreibung

### TECHNISCHES GEBIET

Die vorliegende Erfindung bezieht sich auf das Gebiet der thermischen Kraftwerkanlagen mit Gasturbinengruppen. Die Erfindung beschränkt sich auf die Gasturbinenanlagen (GTA) und die Gas- und Dampfturbinenanlagen (GDTA) bzw. Kombi-Anlagen und betrifft Schaltungen in solchen Anlagen.

### STAND DER TECHNIK

Bei Gasturbinenanlagen wird die Luft durch einen Turbokompressor verdichtet und danach durch die Verbrennung eines Brennstoffs erhitzt. Die Verbrennungsgase expandieren in der Turbine und geben ihre Energie ab. Zu Beginn des Gasturbinenkreisprozesses wird durch einen mehrstufigen Turbokompressor, vorrangig axialer Bauart, die Kompression des Gases realisiert. Die axiale Verdichterstufe besteht aus den Gittern von Laufrad und Leitrad. In der Brennkammer findet eine stetige Verbrennung von gas- oder ölförmigem Brennstoff statt. Die aus der Brennkammer strömenden heissen Gase treiben eine Axialturbine an. Ein Teil der Energie wird zum Antrieb des Kompressors, der auf der gleichen Welle sitzt, aufgewendet. Mit der überschüssigen Energie kann der Generator angetrieben werden.

Um die Leistung und den Wirkungsgrad von Gasturbinen zu steigern, wird das Niveau der mittleren Temperatur der Wärmezufuhr angehoben und das Temperaturniveau der Wärmeabfuhr möglichst niedrig gehalten. Ersteres gelingt durch das Anheben der Turbineneintritts- bzw. Brennkammertemperatur und durch eine Gaszwischenüberhitzung bzw. durch eine sequentielle Verbrennung. Als weitere Massnahme wird bei Kombianlagen zur Gasturbine ein Abhitzedampferzeuger "Heat Recovery Steam Generator" (HRSG) angeschlossen. Der Dampfprozess nutzt die Rauchgaswärme und führt die Abwärme des Prozesses in der Nähe der Umgebungstemperatur ab.

Eine gewünschte Gastemperatur am Turbinenaustritt kann durch den Gasdruck der sequentiellen Verbrennung bzw. der Gaszwischenüberhitzung erreicht werden.

Das Anheben der Rauchgastemperatur in der Brennkammer ist mit ca. 1400°C begrenzt. Heute wird eine hohe Temperatur des Rauchgases (1200°-1400°C) am Eintritt der Gasturbine angestrebt. Diese verursacht Werkstoffprobleme wie bei der Hitzebeständigkeit und der Hochtemperatur-Beanspruchung der Turbinenschaufeln. Die hohe Turbineneintrittstemperatur kann zugelassen werden, wenn die Brennkammer und Turbinenschaufeln gekühlt werden. Die Kühlung geschieht heute bei den meisten in Betrieb befindlichen Gasturbinen durch eine Luftkühlung. Die Kühlluft wird durch Kanäle der hohlen Schaufeln zugeführt und nach ihrem Ausströmen den Turbinengasen beigemischt. Für diese Luftkühlung wird ein Teilstrom der verdichteten Luft an entsprechenden Stellen bzw. Druckniveaus aus dem Turbokompressor entnommen, gekühlt und als Kühlluft dem Kühlsystem der Turbine zugeführt.
Bei Kombianlagen wird heute die Kühlluftkühlung durch einen Wasserdampfstrom in Verdampfer-Wärmetauschern gekühlt, bevor die Kühlluft dem Kühlsystem der Gasturbine zugeführt wird. Die anfallende Wärme aus der Kühlluftkühlung wird im Wasserdampfkreislauf der Dampfturbine wieder nutzbar gemacht. Mit einer solchen Lösung wird der Luft-Wasserdampf-Wärmetauscher parallel zum Verdampfer eines der Gasturbinengruppe nachgeschalteten Abhitzedampferzeugers (HRSG) geschaltet.
Bei Gasturbinenanlagen ist es üblich die Kühlluft mit Hilfe einer Wassereinspritzung (Quench cooling) zu kühlen und als Kühlluft dem Kühlsystem der Turbine zuzuführen. Bei einer solchen offenen Luftkühlung mit einer Wassereinspritzung gehen das zuvor demineralisierte Wasser und seine Verdampfungswärme mit den Turbinenabgasen verloren.

Trotz aller angestrebten Massnahmen zur Reduktion der Verluste in thermischen Kraftwerkanlagen können heute hohe Abgasverluste bei GT-Anlagen und relativ hohe Abdampfverluste bei Kombi-Anlagen festgestellt werden. Diese Verluste bestimmen direkt den thermischen Wirkungsgrad der Anlage.

Zum Vorteil der niedrigen Beschaffungskosten der Gasturbinenanlagen stehen ihnen der niedrige thermische Wirkungsgrad und die teuere Wasservorbereitung zur Kühlung der Turbinenkühlluft gegenüber. Heute werden die Rauchgase mit höherer Abgastemperatur (450°-600°C) ohne Nutzung der Abgaswärme in die Atmosphäre ausgeströmt. Eine Reduktion der Abgastemperatur durch rekuperativen Wärmetauscher zur Nutzung der Abgaswärme ist wegen der höheren Kompressionstemperatur der Luft ohne Massnahmen nicht möglich.

Je nach gas- oder ölförmigem Brennstoff d.h. mit niedrigem oder hohem Schwefelgehalt wird ein entsprechender W/D-Kreislauf im HRSG der Kombianlage geschaltet:
- Einzel-Dampfdruck-Kreislauf "Single-pressure cycle" wird insbesondere für einen Ölbrennstoff mit hohem Schwefelgehalt verwendet. Eine Abgastemperatur über die Taupunkt-Temperatur des Brennstoffs z.B. 133°C ist notwendig.
- Zwei Dampfdruck-Kreisläufe "Dual-pressure cycles" werden am meistens verwendet. Der HP- W/D-Kreislauf und der LP-W/D-Kreislauf ist insbesondere für einen Gasbrennstoff mit niedrigem Schwefelgehalt und niedriger Taupunkt-Temperatur geeignet und werden für eine Abgastemperatur von ca. 100°C eingesetzt.
   Bei einer Rauchgaskühlung bis auf ca. 100°C wird die Gaswärme im tieferen Temperaturbereich d.h. am Ende des HRSGs zur Verdampfung des ND-Wasserstroms genutzt. Der ND-Dampfstrom erhöht jedoch den Abdampfstrom bzw. die Abdampfverluste. Der Einsatz eines ND-W/D-Kreislaufs im HRSG zur Nutzung der Gaswärme bei tieferem Temperaturbereich soll durch besseren Massnahmen ersetzt werden.

Bei Kombi-Anlagen wird heute mit der GT-Austrittstemperatur bis auf ca. 650°C gegangen. Durch eine Nachverbrennung kann der zugeführte Wärmestrom erhöht und die Gastemperatur am Eintritt in den Abhitzedampferzeuger auf über 700°C erhöht werden. Diese erhöht zwar die Anlageleistung, jedoch reduziert sie den Wirkungsgrad der Anlage. Eine Erhöhung des zugeführten Wärmestroms soll durch bessere Massnahmen erreicht werden.

### DARSTELLUNG DER ERFINDUNG

Der Erfindung liegt nun die Aufgabe zugrunde, eine Verbesserung des Gasturbinen-Prozesses, neue Schaltungen der Gaskühlung und einen entsprechenden W/D-Kreislauf im HRSG zu schaffen, um die Leistung und den thermischen Wirkungsgrad von Gasturbinen-und Kombi-Anlagen möglichst zu erhöhen.

In einer Massnahme bei Gasturbinen- und Kombianlagen wird das Temperaturniveau der Wärmeabfuhr weiter reduziert. Diese kann durch eine Erweiterung der Expansionslinie der Gasturbine im Unterdruckbereich erreicht werden.

In einer Massnahme bei Kombianlagen wird der zugeführte Wärmestrom (Qzu) durch die sequentiellen Verbrennung möglichst erhöht. Dadurch erhöht sich der Entropiebereich der Expansionslinie der Gasturbine d.h. die Expansionslinie wird im Ts-Diagramm nach rechts verschoben. Die Erhöhung des zugeführten Wärmestroms führt zu einer Temperaturerhöhung am Gasturbinenaustritt und höherer Gaswärmestrom in den Dampferzeuger HRSG. Damit kann die Nutzung der Gaswärme durch einem HD-W/D-Kreislauf "Single-pressure cycle" ohne der Einsatz eines ND-W/D-Kreislaufs erreicht werden. Diese reduziert den Abdampfstrom bzw. die Abdampfverluste.
Bei erhöhtem Dampferzeugerwärmestrom können zwei Dampfzwischenüberhitzungen und eine hohe Heissdampftemperatur erreicht werden. Diese reduzieren den Speisewasserstrom und damit die Abdampfverluste (Qabd).
Ferner hat die Erhöhung des zugeführten Wärmestroms (Qzu) auch den Vorteil, dass bei gegebenem Brennstoff und entsprechender Abgastemperatur das Verhältnis der Abgasverluste (Qabg) und Abdampfverluste (Qabd) zum zugeführten Wärmestrom kleiner wird. Das führt zu einem besseren thermischen Wirkungsgrad der Anlage ηth = 1-(Qabg+Qabd)/Qzu.
Die infolge der Wärmestromerhöhung erhitzte Gastemperatur am Turbinenaustritt kann durch die Gasexpansion in den Unterdruckbereich reduziert werden.

Eine weitere Möglichkeit zur Kühlung der Turbinengase kann durch eine Rezirkulation eines kühleren Gasstroms aus dem HRSG und durch eine Mischung dieses Stroms mit dem Hauptstrom am Gasturbinenaustritt erreicht werden.

Eine weitere Erhöhung des thermischen Wirkungsgrades von Gasturbinenanlagen kann durch die Reduktion der Abgastemperatur und damit des Abgaswärmestroms (Qabd) erreicht werden ηth = 1 -Qabg/Qzu.
Zusätzlich zur Gasturbinenexpansion im Unterdruckbereich bei Gasturbinenanlagen ermöglicht eine Zwischenkühlung der Kompressorluft eine Reduktion der Kompressorleistung, die Kühlung des Turbinenkühlmediums ohne ein Wasserverbrauch und eine rekuperative Abgaskühlung in den Wärmetauschern, welche zur Reduktion des Abgaswärmestroms (Qabd) führt.

Für eine Kombianlage wird die Aufgabe erfindungsgemäss dadurch gelöst, dass zur neuen Gasturbine der zugeführte Wärmestrom und der Entropiebereich der Expansionslinie durch sequentielle Verbrennung erhöht werden und die Gasturbine durch eine UnterdruckTurbinenstufe erweitert wird. Dadurch werden die Turbinengase auf einen bestimmten Unterdruck expandiert und nach einer Gaskühlung im HRSG durch einen Gaskompressor auf den Atmosphärendruck komprimiert. Ferner wird im HRSG die Nutzung der Gaswärme durch einem HD-W/D-Kreislauf "Single-pressure cycle" ohne der Einsatz eines ND-Kreislaufs erreicht.

Zur Reduktion der Abdampfverluste wird der Kondensatstrom im Mischvorwärmer/Entgaser durch einen Dampfanzapfstrom aus der ND-Dampfturbine auf die Speisewassertemperatur aufgewärmt.

Bei der Gasturbinenanlage wird ebenfalls die Aufgabe erfindungsgemäss dadurch gelöst, dass zur neuen Gasturbine eine Unterdruckstufe nachgeschaltet wird und die Turbinengase nach einer Abkühlung in Wärmetauschern durch einem Gaskompressor auf den Abgasdruck komprimiert werden. Ferner wird die Kompressorluft durch einen Kühler ohne einen Wasserverbrauch zwischengekühlt.

### KURZE ERLÄUTERUNG DER FIGUREN

Die Erfindung soll nachfolgend anhand von Ausführungsbeispielen im Zusammenhang mit den Zeichnungen näher erläutert werden. Die Schaltungen in den Figuren zeigen wie sie für die Anwendung der erfindungsgemässen Erweiterung der Expansionslinie der Gasturbine in den Unterdruckbereich, Kühlluftkühlung und rekuperativen Luftaufwärmung geeignet sind:

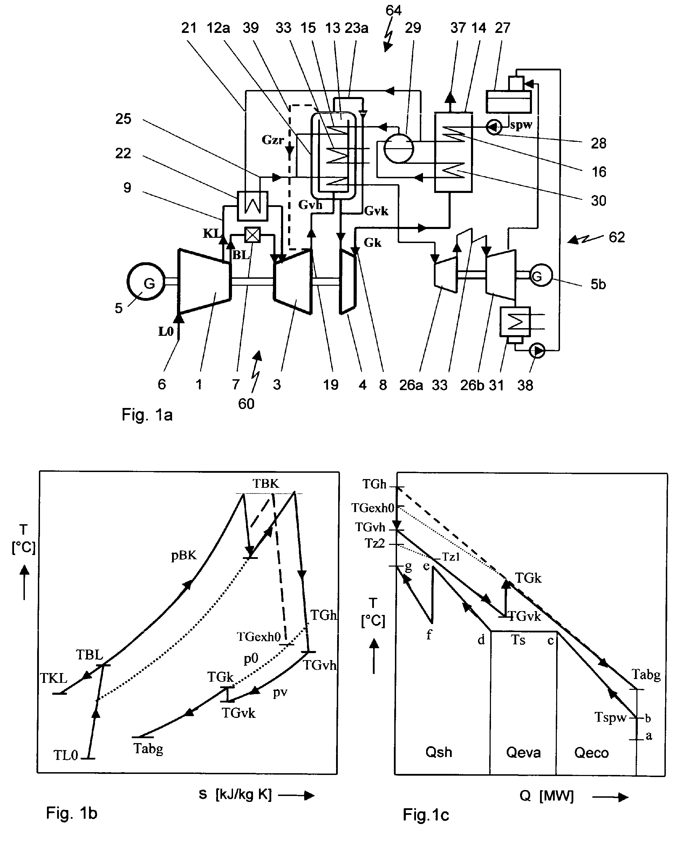

- Fig. 1a: Schaltung einer Gas- und Dampfturbinenanlage mit einer Gasturbinengruppe (60), einer Dampfturbinengruppe (62), einem Rauchgaskompressor (4), einem Gasturbinenkühler (22) und zwei der Gasturbine (3) rauchgasseitig nachgeschalteten Abhitzedampferzeuger (13, 14).
- Fig. 1 b: Darstellung des Temperatur-Entropie-Diagramms für den Luft-Gas-Kreislauf der neuen Kombi-Anlage.
- Fig. 1c: Darstellung des Temperatur-Energietransfer-Diagramms für den Energietransfer zwischen Gas und Dampf im HRSG (13, 14) der neuen Kombi-Anlage.
- Fig. 2a: Schaltung einer Gasturbinenanlage mit einem Turbokompressor (1), einer Gasturbine (3), einem Rauchgaskompressor (4), einem GT-Luftkühler (22), zwei Wärmetauscher (24a, 24b) zur Gaskühlung und zwei Kondensatoren (18a,18b).
- Fig. 2b: Darstellung des Temperatur-Entropie-Diagramms des Luft-Gas-Kreislaufs der neuen Gasturbinenanlage.
- Fig. 3a: Schaltung einer Gasturbinenanlage wie in Fig. 2a jedoch mit einem Luftzwischenkühler (32) und einem rekuperativen Lufterhitzer (20).
- Fig. 3b: Temperatur-Entropie-Diagramm des Luft-Gas-Kreislaufs der GT-Anlage in Fig.3a.

### AUSFÜHRUNG DER ERFINDUNG IN KOMBI-ANLAGEN

In einer Ausführung der Erfindung wird eine Kombianlage (Fig. 1 a) mit einer Gasexpansion der heissen Gase in einer Unterdruckstufe der Gasturbine 3 schematisch dargestellt. Die Anlage umfasst zwei Kreisprozesse, ein Luft-Gas-Kreislauf der Gasturbinengruppe 60 und ein Wasser-Dampfkreislauf 64 mit einer Dampfturbinengruppe 62.
Die Gasturbinengruppe besteht aus einem Turbokompressor 1, einer Gasturbine 3, einem Gaskompressor 4, einem Kühlluftkühler 22, und einem Generator 5. Der der Gasturbine rauchgasseitig nachgeschaltete Dampferzeuger besteht aus zwei Teilen, den Dampferzeugern 13 und 14 (HRSG 1 und 2), welche eine Anzahl von Heizflächen aufweisen, die im Wasser-Dampf-Kreislauf der Dampfturbine 26 geschaltet sind.
Zur Dampfturbine 26a und 26b sind wasserdampfseitig ein Kondensator 31, eine Kondensatpumpe 38, ein Entgaser-Speisewasserbehälter 27, eine Speisewasserpumpe 28, eine Vorwärmerzone 16 (Economiser), ein Verdampfer 30, Dampfüberhitzer 15, 15b, 33 und eine Wasserdampftrommel 29 verbunden.

Ein Beispiel der Anwendung der Erfindung in einer Kombi-Anlage ist in Fig. 1a dargestellt. Durch den Turbokompressor 1 wird der Luftstrom L0 angesaugt und auf den Bennkammerdruck pBK verdichtet. Für den Kühlungszweck der Gasturbinen-Komponente wird aus dem Turbokompressor 1 ein Luftstrom KL entnommen und durch den Luftkühler 22 gekühlt. Der Hauptluftstrom wird in der Brennkammer 7 durch die Verbrennung des Brennstoffs auf die Brennkammertemperatur TBK erhitzt und durch die Gasturbine 3 expandiert. Die Turbinengase werden durch eine Unterdruckstufe der Gasturbine in den Unterdruckbereich weiter expandiert. Die Gasturbine 3 wird so ausgelegt, dass die Turbinengase auf einen Unterdruck pv zwischen 0.60 - 0.75 bar und auf eine Gastemperatur TGvh expandiert werden. Der heisse Gasstrom Gvh wird bei einem Unterdruck durch den ersten Dampferzeugerteil 13 (HRSG 1) gekühlt. Da auf der Gasseite des Dampferzeugers 13 ein Unterdruck herrscht, werden die Heizflächen 15, 15b, 33 vorzugsweise in einem zylindrischen Unterdruckbehälter 12 angeordnet. Bei Grossen Anlagen ergibt sich gasseitig ein grosser Volumenstrom. Der zylindrische Unterdruckbehälter 12 wird deshalb in zwei Teile geteilt und die beiden Teile werden parallel geschaltet.
Der Gasstrom Gvh wird im Dampferzeuger 13 auf eine Temperatur TGvk gekühlt, die über der Sättigungstemperatur des Wasserdampfs bleiben muss, damit eine positive Temperaturdifferenz gewährleistet wird (Fig. 1c).
Nach der Kühlung durch den Dampferzeuger 13 strömt der gekühlte Gasstrom Gvk durch die Gasleitung 23a und 23 in den Rauchgaskompressor 4, wodurch der Gasstrom Gvk auf den Druck p0 des zweiten Dampferzeugerteits 14 (HRSG 2) komprimiert wird. Dadurch steigt die Gastemperatur von TGvk auf TGk (Fig. 1 b und 1 c).

Zwecks der Kühlung der Mantelwand 12a des Unterdruckbehälters kann ein Innenhemd 12b im Behälter eingebaut werden. Aus dem gekühlten Hauptgasstrom am Austritt des Unterdruckbehälters wird ein By-pass-Gasstrom entnommen. Der By-passstrom strömt zwischen dem Innen- und Aussen-Mantel des Unterdruckbehälters, kühlt die Mantelwand und strömt durch die By-passgasleitung 23b in die Hauptleitung 23. Die Einführung der Leitung 23b in die Hauptleitung 23 wird so konzepiert, dass eine Injektorwirkung entsteht und ein grösserer By-passgasstrom gesaugt wird.

Im Abhitzedampferzeuger 14 sind die Economiser-Heizfläche 16 und die Verdampferheizfläche 30 angeordnet. Der Gasstrom Gk wird auf die Abgastemperatur Tabg gekühlt und als Abgase 37 abgeführt.
Das Kondensat wird durch die Kondensatpumpe 38 aus dem Kondensator 31 in den Entgaser/Speisewasserbehälter 27 geführt. Im Entgaser wird das Kondensat durch eine Mischung mit einem Anzapfdampfstrom aus der ND-Dampfturbine 26b auf die Sättigungstemperatur des Speisewasserdrucks aufgewärmt und entgast (a-b in Fig. 1c).
Das durch die Pumpe 28 geförderte Speisewasser wird durch den Economiser vorgewärmt (b-c) und in die Dampftrommel 29 eingeführt. Durch einen Umlaufverdampfer 30, der zur Dampftrommel geschaltet ist wird das Speisewasser verdampft (c-d). Der Sattdampf strömt aus der Trommel 29 zur Ueberhitzung in die Ueberhitzerflächen 15 (d-e und f-g in Fig. 1 c). Ein Teilstrom wird aus dem Speisewasser entnommen und durch die Leitung 21 in den Gasturbinenluftkühler 22 geführt. Der Wasserteilstrom wird durch die Luftabkühlung verdampft und überhitzt und durch die Leitung 25 zum Hauptstrom wieder beigemischt und in den Endüberhitzer 15b geführt. Der Frischdampf wird in der HD-Dampfturbine 26a expandiert. Der Arbeitsdampf wird durch den Zwischenüberhitzer 33 wieder überhitzt, in die ND-Dampfturbine 26b expandiert und im Kondensator 31 kondensiert.

In der vorliegenden Erfindung der Kombianlage wird der in die GT-Brennkammer zugeführte Brennstoff bzw. Wärmestrom Qzu durch die sequentielle Verbrennung möglichst erhöht und die Gastemperatur am GT-Austritt durch die Unterdruckexpansion reduziert. Die Erhöhung von Qzu kann durch eine grössere HD-Gasexpansion und eine grössere Gaszwischenüberhitzung (wie in Fig. 1 b), oder durch zwei sequentielle Verbrennungen bzw. zwei Gaszwischenüberhitzungen erreicht werden. Dadurch erhöht sich der Entropiebereich der Expansionslinie der Gasturbine, d.h. die Expansionslinie wird im Ts-Diagramm nach rechts verschoben. Diese erhöht den Wärmestrom zum HRSG und ermöglicht die Nutzung der Gaswärme durch einen HD-W/D-Kreislauf (Einzel-Dampfdruck-Kreislauf) ohne der Einsatz eines ND-W/D-Kreislaufs. Die Anwendung des Einzel-Dampfdruck-Kreislaufs reduziert den Abdampfstrom bzw. die Abdampfverluste Qabd.

Die Verluste können dadurch weiter minimiert werden, wenn die Gastemperatur TGh bzw. TGvh stärker erhöht und zwei Dampfzwischenüberhitzer eingesetzt werden.

Die Gastemperatur am Turbinenaustritt kann bei erhöhtem Entropiebereich der Expansionslinie auch durch eine andere Massnahme reduziert werden. Ein gekühlter Rauchgasstrom Gzr wird aus dem Hauptgasstrom im Bereich des Verdampfers entnommen und in die Turbinenaustrittsöffnung (19) eingeführt und mit dem Turbinenabgasstrom gemischt. Durch die Rezirkulation des Rauchgasstroms Gzr werden die Turbinenaustrittsöffnung und die Turbinenabgase gekühlt. Die Einführung des kühleren Rauchgasstroms Gzr in die Turbinenaustrittsöffnung wird so konzipiert, dass eine Injektorwirkung auftreten soll und ausreichender Gasstrom Gzr gesaugt und zirkuliert wird. Die Kühlung der Turbinenabgase durch eine Rezirkulation eines kühleren Rauchgasstroms kann ohne eine Unterdruckturbinenstufe eingesetzt werden, wie sie durch die Kennlinie zwischen TGk und Tgexh0 in Fig. 1c dargestellt ist.
Die Kühlung durch eine Rauchgaszirkulation kann auch zusammen mit einer Unterdruckturbinenstufe zwecks einer weiteren Kühlung der Turbinenabgase (Kennlinie zwischen Tz1 und Tz2 in Fig. 1 c) eingesetzt werden.

Die erfindungsgemässe Schaltung in Kombi-Anlagen zeichnet sich durch folgende Vorteile und charakteristische Eigenschaften aus:
- Die auf die Gasturbinenwelle indizierte Expansionsleistung durch die Unterdruckstufe ist grösser als die Kompressionsleistung der im HRSG 1 gekühlten Gase Gvk durch den Rauchgaskompressor 4. Die Differenz ist ein Leistungsgewinn durch die Unterdruckstufe.
- Mit der in der neuen Schaltung eingesetzten Unterdruckstufe der Gasturbine kann der zugeführte Wärmestrom in der GT-Brennkammer und somit auch der Entropiebereich der Expansionslinie erhöht und die Gastemperatur am Gasturbinenaustritt reduziert werden. Damit steigt die Leistung und der thermische Wirkungsgrad der Anlage.
- Durch die eingesetzte Unterdruckstufe der Gasturbine und die Erhöhung der Brennkammerleistung und des Wärmestroms in den HRSG kann die Nutzung der Gaswärme durch einen Einzel-Dampfdruck-Kreislauf ohne den Einsatz eines ND-W/D-Kreislaufs erreicht werden. Die Anwendung des Einzel-Dampfdruck-Kreislaufs reduziert den Abdampfstrom bzw. die Abdampfverluste (Qabd). Ferner wird das Verhältnis der unveränderten Abgasverluste (Qabg) zum erhöhten zugeführten Wärmestrom kleiner. Das führt zu einem besseren thermischen Wirkungsgrad der Anlage.
- Durch den Einbau vom Innenhemd im Unterdruckbehälter und die Einführung des By-pass-Gasstroms aus den gekühlten Gasen wird die Wand des Unterdruckbehälters gekühlt.
- Durch die aufgeführten Massnahmen kann der thermische Wirkungsgrad der Kombianlage um mehr als 0.02 (z.B. von 0.58 auf über 0.60) und die Leistung der Anlage um mehr als 20% erhöht werden.

### AUSFÜHRUNG DER ERFINDUNG IN GASTURBINENANLAGEN

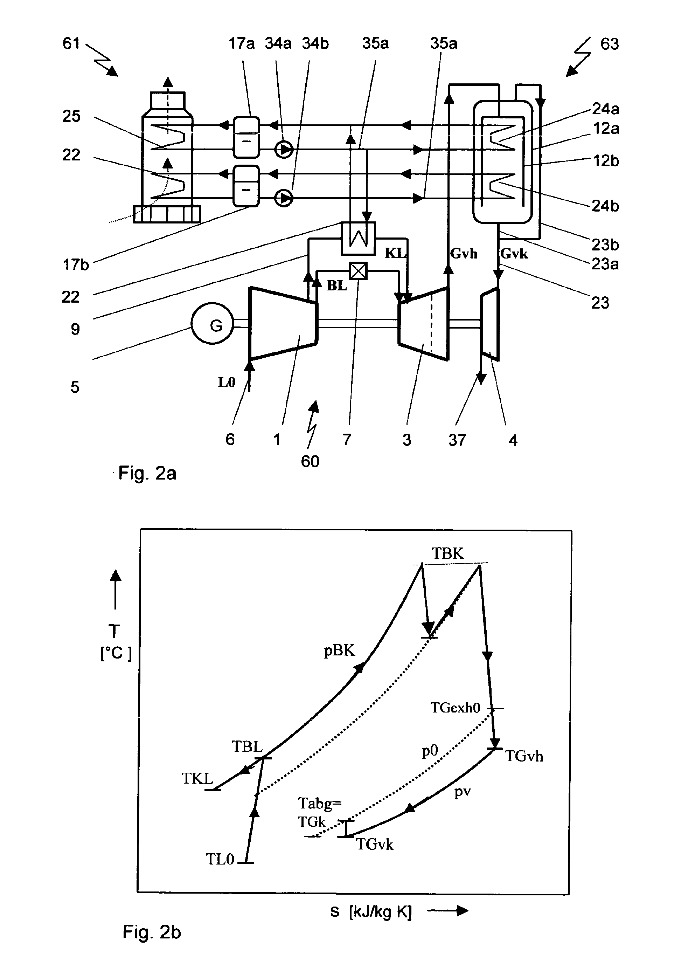

In einer Ausführung der Erfindung ist eine Gasturbinenanlage in Fig. 2a dargestellt. Auf der gleichen Welle der Gasturbine werden neben dem Turbokompressor 1 und der Turbine 3 ein Gaskompressor 4 und ein Generator 5 angeordnet. Durch den Turbokompressor 1 wird der Luftstrom L0 angesaugt, verdichtet und in die Brennkammer 7 der Gasturbine geführt.
Für den Kühlungszweck der Gasturbinen-Komponente wird aus dem Turbokompressor 1 ein Kühlluftstrom KL entnommen und durch den Luftkühler 22 gekühlt. Der gekühlte Luftstrom KL wird zur Kühlung von thermisch belasteten Teilen direkt in die Gasturbine geführt. Die Kühlung des Kühlluftstroms KL erfolgt im Luftkühler 22 durch einen Umlaufverdampfer, der sekundärseitig in einem MD-Wasserdampf-Kreislauf geschaltet und mit einer MD-Wasserdampftrommel 17a und einem Kondensator 18a verbunden ist.

Durch die Verbrennung eines Brennstoffes in der Brennkammer ergibt sich eine höhere Gastemperatur von z.B. 1300°C. Durch die HD- und ND-Stufen der Gasturbine expandieren die Gase normalerweise auf den Abgasdruck. In der vorliegenden Erfindung wird die Gasturbine 3 so ausgelegt, dass die Turbinengase auf einen Unterdruck zwischen 0.60 - 0.75 bar und auf eine Temperatur TGvh expandiert werden (Fig. 2b). Der heisse Gasstrom Gvh strömt unter einem Unterdruck aus der Gasturbine 3 in den Unterdruckbehälter 12, in dem zwei Wärmetauscher 24a, 24b angeordnet sind. Die Gaskühlung erfolgt zunächst durch den Wärmetauscher 24a, der sekundärseitig als Umlaufverdampfer in einem MD-Wasserdampf-Kreislauf geschaltet und mit einer Wasserdampftrommel 17a und einem Kondensator 18a verbunden ist. Die weitere Gaskühlung erfolgt durch den Wärmetauscher 24b, der sekundärseitig als Umlaufverdampfer in einem ND-Wasserdampf-Kreislauf geschaltet und mit einer Wasserdampftrommel 17b und einem Kondensator 18b verbunden ist. Der somit auf eine Temperatur TGvk gekühlte Gasstrom Gvk wird durch den Rauchgaskompressor 4 auf den Abgasdruck komprimiert und die Abgase werden in die Atmosphäre ausströmen.
Die Abkühlung der Gase bei einer Verdampfung von Kühlwasser im Wärmetauscher 24a und 24b ist hier nicht zwecks einer rekuperativen Wärmenutzung, sondern nur um die Kompressionsleistung durch den Gaskompressor 4 zu reduzieren.

Die auf die Gasturbinenwelle indizierte Expansionsleistung durch die Unterdruckstufe ist grösser als die Kompressionsleistung der gekühlten Gase Gvk durch den Rauchgaskompressor 4.

In einem zweiten Kühlsystem können der Luftkühler 32 und der Gaskühler 24 sekundärseitig direkt durch eine luftgekühlte Kühlfläche gekühlt werden.

Die Differenz ist ein Leistungsgewinn durch die Unterdruckstufe. Dadurch kann der thermische Wirkungsgrad der Gasturbinenanlage um 0.07-0.10 d.h. ηth net = 0.44-0.47 und die Leistung um 20-25% erhöht werden.

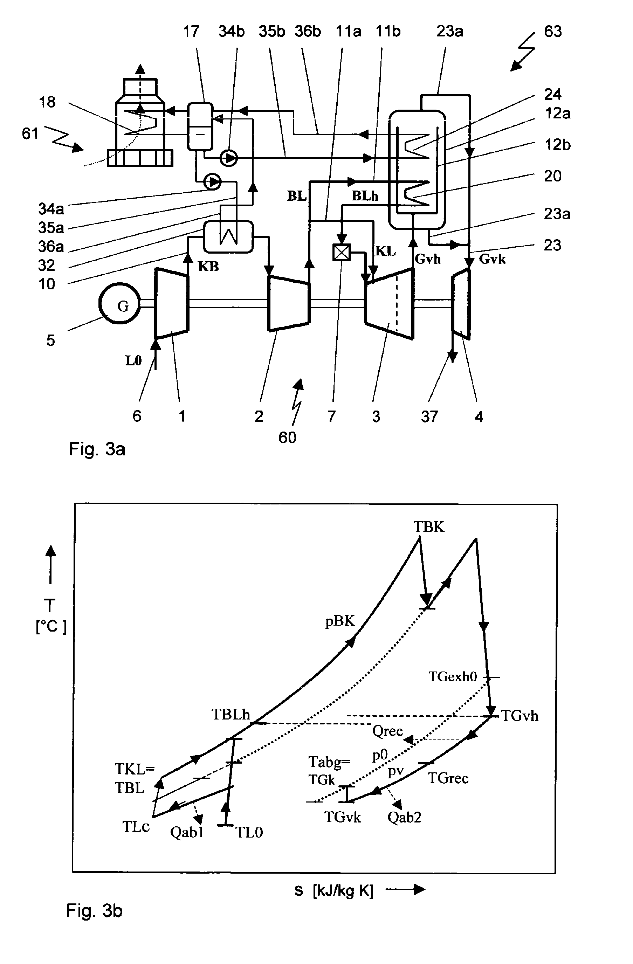

In einer weiteren Ausführung der Erfindung ist eine Gasturbinenanlage mit drei Verdichtern dargestellt (Fig. 3a). Auf der gleichen Welle der Gasturbine werden neben der Turbine 3 ein ND-Turbokompressor 1, ein HD-Turbokompressor 2, ein Gaskompressor 4 und ein Generator 5 angeordnet. Durch den Turbokompressor 1 wird der Luftstrom L0 angesaugt und verdichtet. Je nach Ambientstemperatur (zwischen -20° und +35°C) und dem Kompressionsdruck durch den Luftstrom (z.B. 5 bar) ergibt sich eine Temperatur von 130° - 250°C am Eintritt des Zwischenkühlers 32. Der ND-Luftstrom KB wird durch den Zwischenkühler soweit wie möglich auf die Temperatur TLc gekühlt (bei Tamb =15°C TLc von 200° auf unter 90°C). Der zwischengekühlte Luftstrom KB, der für die Kühlung der Gasturbinen-Komponente und die Verbrennung vorgesehen ist, wird durch den Kompressor 2 auf den Brennkammerdruck pBK und die Temperatur TBL verdichtet (Fig. 3b). Die Zwischenkühlung des Luftstroms KB reduziert die Kompressionsleistung des Luftstroms im Kompressor 2. Der Hochdruck-Luftstrom KB wird in zwei Teilströmen, in den Kühlluftstrom KL und die Brennkammerluft BL, geteilt. Der zwischengekühlte Brennkammer-Luftstrom BL wird durch die Leitung 11 b in den Rekuperator-Wärmetauscher 20 geleitet, auf eine entsprechende Brennkammer-Eintrittstemperatur erhitzt und in die Brennkammer 7 geführt. Der zwischengekühlte Kühlluftstrom KL benötigt keine weitere Kühlung und wird durch die Leitung 11a zur Kühlung der thermisch belasteten Teilen direkt in die Gasturbine geführt.

Eine Zwischenkühlung der Kompressorluft einer Gasturbine führt zur Reduktion der Kompressorleistung und zur tieferen Lufttemperatur am Austritt des Kompressors. Damit liegt diese Lufttemperatur wesentlich tiefer als die Gastemperatur am Turbinenaustritt und die Temperaturdifferenz ermöglicht einen Wärmetransfer durch den Rekuperator-Wärmetauscher 20 zur Erhitzung des Brennkammerluftstroms BL.

Wie in der Ausführung der Erfindung in Fig. 2a und 2b werden in der vorliegenden Ausführung nach Fig. 3a und 3b die Turbinengase auf einen Unterdruck zwischen 0.60 - 0.75 bar und auf eine Temperatur TGvh expandiert. Der heisse Gasstrom Gvh strömt unter einem Unterdruck aus der Gasturbine 3 in den Unterdruckbehälter 12, der aus einem Rekuperator-Lufterhitzer 20 und einem wasserdampfgekühlten Wärmetauscher 24 besteht. Die Gase werden zunächst im Lufterhitzer 20 auf eine Temperatur TGrec gekühlt. Dadurch wird die Brennkammerluft auf eine Temperatur TBLh erhitzt. Die Gase werden durch den wasserdampfgekühlten Wärmetauscher 24 weiter auf eine Temperatur TGvk gekühlt. Der gekühlte Gasstrom Gvk wird durch den Rauchgaskompressor 4 auf den Abgasdruck komprimiert und als Abgase in die Atmosphäre ausströmen.
Eine Erhitzung des Brennkammerluftstroms BL durch eine rekuperative Abgaskühlung führt zu einem besseren Wärmeverbrauch in der Gasturbinenanlge. In dieser Ausführung nach Fig. 3a kann der thermische Wirkungsgrad der Gasturbinenanlage um ca. 0.11 d.h. ηth net auf ≈0.48 und die Leistung um ca. 32% erhöht werden.

Eine Anzahl von weiteren Ausführungen der Erfindung in Gasturbinenanlgen sind möglich.
- In einer Version werden die Turbinengase auf eine tiefere Unterdruckstufe z.B. 0.3 bar expandiert. Der Rauchgasstrom wird in einem ersten Unterdruckbehälter gekühlt, durch einen Rauchgaskompressor auf eine zweite Unterdruckstufe (z.B. von 0.3 auf 0.6 bar) komprimiert, in einem zweiten Unterdruckbehälter gekühlt und durch einen zweiten Rauchgaskompressor auf den Abgasdruck komprimiert.
- In einer weiteren Version wird die Kompressionsluft zwischengekühlt und die Turbinengase werden teilweise auf eine Unterdruckstufen expandiert. Ein Rauchgasstrom wird durch die Erhitzung der zwischengekühlten Brennkammerluft rekuperativ gekühlt. Der zweite Rauchgasstrom wird in einem Unterdruckbehälter durch die Kühlmittel gekühlt und durch einen Rauchgaskompressor 4 auf den Abgasdruck komprimiert.
- Die in Fig. 3a dargestellte Luftzwischenkühlung kann in zwei Stufen ausgeführt werden. In diesem Fall werden drei Luftkompressoren benötigt. Der Luftstrom KB wird zweimal durch Zwischenkühlern auf eine Temperatur von unter 100 °C gekühlt und verdichtet. Bei zweistufiger Zwischenkühlung kann der rekuperative bzw. nützliche Teil der Abgaskühlung durch den Kühler 20 verstärkt und der Anlagewirkungsgrad noch mehr verbessert werden.

Die Abkühlung der Gase durch den Wärmetauscher 24 ist keine rekuperative Gaskühlung und ist nicht zwecks der Wärmennutzung, sondern um die Kompressionsleistung durch den Gaskompressor 4 zu reduzieren.

Zwecks der Kühlung der Wand des Unterdruckbehälters kann ein Innenhemd 12b im Behälter eingebaut weden. Ein gekühlter By-pass-Gasstrom strömt zwischen dem Innenhemd und dem Aussen-Mantel des Unterdruckbehälters, kühlt die Wand und strömt durch die By-passgasleitung 23b in die Hauptleitung 23. Die Einführung der Leitung 23b in die Hauptleitung 23 wird so konzipiert, dass eine Injektorwirkung entsteht und ein grösserer By-passgasstrom gesaugt wird.

Die Luftkühlung durch die Kühler 32, 22 und die Gaskühlung durch den Gaskühler 24 können in einem der drei Kühlsysteme erfolgt werden:
- Die Kühlflächen werden sekundärseitig in einem Wasser-Dampf-Kreislauf geschaltet, der über eine Wasser-Dampftrommel 17 mit einem luftgekühlten Kondensator 18 im Kühlturm verbunden ist. Die Kühler 32, 22 und 24 bilden mit der Trommel 17, den Umlaufpumpen 34a, 34b und den Wasserdampfleitungen 35, 36 zwei Umlaufverdampfer. Die durch die Luft- und Gaskühlung sich entwickelte Dampfströme werden in der Trommel 17 vom Wasser abgeschieden und im luftgekühlten Kondensator 18 im Kühlturm kondensiert.
- In einem Kühlsystem sind der Luftkühler 32 und der Gaskühler 24 (gemäss der Ausführung nach Fig. 3a) sekundärseitig in einem Wasserkreislauf geschaltet und durch diesen Kreislauf mit einem luftgekühlten Wärmetauscher im Kühlturm verbunden.
- In einem Kühlsystem können der Luftkühler 32, 22 und der Gaskühler 24 sekundärseitig direkt durch eine Luftkühlung gekühlt werden.

Die erfindungsgemässe Schaltung in Gasturbinenanlagen zeichnet sich durch folgende Vorteile und charakteristische Eigenschaften aus:
- Durch die Gasexpansion in einer Unterdruckstufe der Gasturbine kann die Gastemperatur am Gasturbinenaustritt reduziert werden.
- Die auf die Gasturbinenwelle indizierte Expansionsleistung durch die Unterdruckstufe ist grösser als die Kompressionsleistung der gekühlten Gase Gvk durch den Rauchgaskompressor 4. Die Differenz ist ein Leistungsgewinn durch die Unterdruckstufe.
- Mit der eingesetzten Zwischenkühlung der GT-Kühlluft in Fig. 3a kann die Kompressionsleistung durch den Kompressor 2 reduziert werden.
- Die Zwischenkühlung des Kompressorluftstroms KB ermöglicht eine rekuperative Aufwärmung des Brennkammerluftstroms BL bei einer Abkühlung der Turbinengase.
- Die für die thermisch belasteten Turbinenteile notwendige Kühlluft wird ohne einen Wasserverbrauch gekühlt und bereitgestellt. Diese trockene Kühlung der Turbinenkühlluft ist besonders in Ländern mit trockenen Gebieten bzw. mit Wasserknappheit wichtig.
- Durch den Einsatz der Unterdruckstufe der Gasturbine können die Leistung und der thermische Wirkungsgrad der Gasturbinenanlage stark erhöht werden. Der thermische Wirkungsgrad (netto) kann auf ηth net zwischen 0.44 und 0.50 und die Leistung zwischen 20% und 30% erhöht werden. Dieser Sprung an Wirkungsgrad ermöglicht eine neue Option für die thermischen Anlagen zur Stromerzeugung.

### BEZUGSZEICHENLISTE

- 1: Turbokompressor zur Kompression des Ansaugluftstroms L0
- 2: Turbokompressor zur Kompression des zwischengekühlten Luftstroms KB
- 3: Gasturbine
- 4: Rauchgaskompressor mit Unterdruck an der Saugseite
- 5: Generator
- 6: Frischluftstrom, Ansaugstrom L0
- 7: Brennkammer der Gasturbine
- 8: Gasleitung zwischen Gaskompressor 4 und HRSG 13
- 9: Kühlluftleitung zum Luftkühler
- 10: ND-Luftleitung zum Luftzwischenkühler
- 11: Luftleitung aus dem Turbokompressor 2, Luftstrom KB=KL+BL
- 12: Unterdruckbehälter, 12a Behältermantel, 12b Innenhemd zur Mantelkühlung
- 13: Teil 1 des Dampferzeugers HRSG (Fig. 2a)
- 14: Teil 2 des Dampferzeugers HRSG
- 15: Dampfüberhitzer, 15b Endüberhitzer
- 16: Economiser
- 17: Wasserdampftrommel für Luft- und Gaskühlung
- 18: Luftgekühlter Kondensator im Kühlturm
- 19: Austrittsöffnung der Gasturbine
- 20: Rekuperator-Lufterhitzer, Gaskühler
- 21: Kondensatleitung zur Kühlluftkühlung
- 22: Gasturbinen-Luftkühler durch Wasserdampf gekühlt
- 23: Gasleitung zum Gaskompressor 4,
23a: Austrittsgasleitung aus dem Unterdruckbehälter 12
23b: Bypassgasleitung zwischen Unterdruckbehälter 12 und Gasleitung 23
- 24: Wärmetauscher zur Gaskühlung durch Kühlmittel (Luft oder Wasserdampf)
- 25: Kühldampfleitung zwischen Luftkühler und Dampfüberhitzer
- 26: Dampfturbine, HD, MD/ND
- 27: Speisewasserbehälter/Entgaser, SPWB/Entgaser
- 28: HD-Speisewasserpumpe
- 29: HD-Dampftrommel
- 30: Verdampfer
- 31: Kondensator
- 32: Wasserdampfgekühlter Luftzwischenkühler
- 33: Dampfzwischenüberhitzer
- 34: Zirkulationspumpe des Kühlkondensats a) für Luftkühlung, b) für Abgaskühlung
- 35: Kühlkondensatleitung a & b
- 36: Kühlwasserdampfleitung a & b
- 37: Abgasstrom Gabg
- 38: Hauptkondensatpumpe
- 39: Gaszirkulationsleitung

- 60: Gasturbinengruppe: Kompressor, Brennkammer, Gasturbine und Generator
- 61: Kühlmittelkühlung
- 62: Dampfturbinengruppe: HD-Dampfturbine, ND-Dampfturbine und Generator
- 63: Turbinengaskühler, Wärmetauscher im Unterdruckbehälter 12 angeordnet
- 64: Wasser-Dampf-Kreislauf

- Tamb: Ambientstemperatur, Umgebungstemperatur
- L0: Ansaugluftstrom aus der Umgebung, Umgebungsluftstrom
- KB: Luftstrom aus dem Turbokompressor zur Kühlung und Verbrennung
- KL: Kühlluftstrom zur Kühlung der Gasturbine
- BL: Zwischengekühlter Brennkammer-Luftstrom
- BLh: Erhitzter Luftstrom zur Brennkammer
- Gvh: Heisser Gasstrom am Austritt der Gasturbine 3 unter Unterdruck
- Gvk: Gekühlter Gasstrom nach dem Unterdruckbehälter 12
- Gk: Gasstrom nach dem Gaskompressor 4
- Gkk: Gasstrom nach dem HRSG bzw. Behälter 13
- Gabg: Abgasstrom
- Qzu: Zugeführter Wärmestrom
- Qabg: Abgaswärmestrom
- Qabd: Abdampfwärmestrom
- ηth: Thermischer Wirkungsgrad
- ηth net: Thermischer Wirkungsgrad netto

- GT: Gasturbine, Gasturbinengruppe
- KWA: Kraftwerkanlage: Gasturbinenanlage, Dampfturbinenanlage oder Kombi-Anlage
- GTA: Gasturbinenanlage
- DTA: Dampfturbinenanlage
- GDTA: Gas-Dampf-Turbinenanlage bzw. Kombi-Anlage
- HRSG: "Heat Recovery Steam Generator", Abhitzedampferzeuger
- ND: Niederdruck
- MD: Mitteldruck
- HD: Hochdruck
- W/D: Wasser-Dampf

## Patentansprüche

1. Eine Thermische Kraftwerkanlage mit einer Gasturbinengruppe (60) mit mindestens einem Rauchgaskompressor (4) und mindestens einem Unterdruckbehälter (12), in dem mindestens ein Wärmetauscher für die Gaskühlung angeordnet ist, **dadurch gekennzeichnet, dass**
die Luft durch den Turbokompressor (1) verdichtet und durch die Verbrennung eines Brennstoffs erhitzt wird, mindestens ein Teil der Verbrennungsgase durch die Gasturbine (3) auf einen Unterdruck expandiert, durch Wärmetauscher in mindestens einem Unterdruckbehälter (12) gekühlt und durch den Gaskompressor (4) mindestens auf den Abgasdruck komprimiert wird.

2. Eine Gasturbinenanlage nach Anspruch 1 mit einer Gasturbine (3), einem Turbokompressor (1), einem Rauchgaskompressor (4), und mindestens einem Unterdruckbehälter (12) **dadurch gekennzeichnet, dass**
mindestens ein Teil der Turbinengase durch die Gasturbine (3) auf einen Unterdruck expandiert, durch Wärmetauscher in mindestens einem Unterdruckbehälter (12) gekühlt und durch einen Rauchgaskompressor (4) auf den Abgasdruck komprimiert wird.

3. Eine Gasturbinenanlage nach Anspruch 2 mit einer Gasturbine (3), einem Turbokompressor (1), zwei Rauchgaskompressoren (4), und mindestens zwei Wärmetauschern **dadurch gekennzeichnet, dass**
nach der Expansion der Turbinengase auf einen Unterdruck durch die Gasturbine (3) und deren Kühlung durch Wärmetauscher die gekühlten Gase durch einen Rauchgaskompressor (4) auf einen zweiten Unterdruck komprimiert und durch Wärmetauscher wiedergekühlt werden, bevor die Gase durch den zweiten Rauchgaskompressor auf den Abgasdruck komprimiert werden.

4. Eine Gasturbinenanlage nach Anspruch 2 oder 3, mit mindestens zwei Turbokompressoren (1, 2), mindestens einem Luftzwischenkühler (32) und mindestens einem Unterdruckbehälter (12), in welchem Wärmetauscher (24, 20) für die Gaskühlung angeordnet sind, **dadurch gekennzeichnet, dass**
der ND-Luftstrom aus dem Turbokompressor (1) durch den Luftzwischenkühler (32) gekühlt und durch den Turbokompressor (2) verdichtet wird, ein Teilstrom aus dem Kompressor (2) als Kühlmittelstrom KL zur Kühlung der Gasturbine (3) vorgesehen ist und ein Teilstrom KB durch eine Abkühlung der Turbinenabgase im Rekuperator-Lufterhitzer (20) erhitzt wird, die Turbinengase nach der Verbrennung durch die Gasturbine (3) auf mindestens ein Unterdruckniveau expandiert, durch die Wärmetauscher (24, 20) gekühlt und durch mindestens einen Rauchgaskompressor (4) auf den Abgasdruck komprimiert werden.

5. Eine Gasturbinenanlage nach einem der Ansprüche 2, 3, 4 mit mindestens einer Wasserdampf-Trommel (17), mindestens einem Kondensator (18) **dadurch gekennzeichnet, dass**
die zur Kühlung der Turbinenabgase eingesetzten Gaskühler (24) und der zur Luftkühlung eingesetzte Kühlluftkühler (22) oder Luftzwischenkühler (32) sekundärseitig in mindestens einem Wasserdampfkreislauf geschaltet und mit mindestens einer Wasserdampf-Trommel (17) und mindestens einem Kondensator (18) verbunden sind.

6. Eine Gas- und Dampfturbinenanlage nach Anspruch 1 mit einer Gasturbinengruppe (60), einer Dampfturbinengruppe (62) und einem Wasser-Dampf-Kreislauf (64) mit zwei Dampferzeugerteilen (13) und (14) **dadurch gekennzeichnet, dass**
die Turbinengase durch die Gasturbine (3) in den Unterdruckbereich expandiert, durch den ersten Dampferzeugerteil (13) rauchgasseitig unter einem Unterdruck gekühlt, durch einen Rauchgaskompressor (4) auf einen Überdruck komprimiert und durch den zweiten Dampferzeugerteil (14) weiter gekühlt werden.

7. Eine Gas- und Dampfturbinenanlage nach Anspruch 1 und 6 mit einer Gasturbinengruppe (60), einer Dampfturbinengruppe (62) und einem Wasser-Dampf-Kreislauf (64) mit zwei Dampferzeugerteilen (13) und (14) **dadurch gekennzeichnet, dass** die Heizflächen des ersten Dampferzeugerteils (13) in mindestens einem vorzugsweise zylindrischen Unterdruckbehälter (12) angeordnet sind.

8. Eine Gas- und Dampfturbinenanlage nach Anspruch 1, 6 und 7 mit einer Gasturbinengruppe (60) **dadurch gekennzeichnet, dass**
die Turbinengase durch die Gasturbine (3) in den Unterdruckbereich expandiert und/oder durch eine Rezirkulation eines kühleren Rauchgasstroms Gzr aus dem Dampferzeuger und durch eine Einführung dieses Gasstroms an der Turbinenaustrittsöffnung (19) gekühlt werden.

9. Eine Thermische Kraftwerkanlage nach einem der Ansprüche 1 bis 8 **dadurch gekennzeichnet, dass**
zwecks einer Mantelkühlung des Unterdruckbehälters (12a) ein Innenhemd (12b) im Behälter eingebaut, aus dem gekühlten Hauptgasstrom am Behälteraustritt ein By-passgas entnommen, durch die Strömung des By-passgases zwischen dem Innenhemd und dem Aussenmantel des Unterdruckbehälters die Mantelwand gekühlt und der By-pass-Gasstrom durch eine Bypassgasleitung (23b) in die Hauptgasleitung (23) geführt wird.
